# EUROPEAN PATENT SPECIFICATION

(11) **EP 4 466 467 B1**
(45) Date of publication and mention of the grant of the patent: **25.06.2025**
(21) Application number: 23708865.3
(22) Date of filing: 21.02.2023
(51) Int. Cl.: F16B 23/00, B25B 13/48, B25B 15/00

(54) **SECURITY FASTENER**
SICHERHEITSVERSCHLUSS
ÉLÉMENT DE FIXATION DE SÉCURITÉ

(30) Priority: 24.02.2022 GB 202202581
(43) Date of publication of application: 27.11.2024
(73) Proprietor: Ultra PCS Limited, Cheltenham, Gloucestershire GL51 6PN (GB)
(72) Inventor: BIGGADIKE, Christopher Stephen Andrew, Cheltenham Gloucestershire GL51 6PN (GB)
(74) Representative: Wardle, Callum Tarn
(86) International application number: PCT/GB2023/050385
(87) International publication number: WO 2023/161614

(56) References cited:
- CN-U- 201 763 780
- CN-U- 201 763 781
- GB-A- 2 408 302
- US-A- 4 429 599

## Description

### Technical Field

The invention relates to a security fastener and a driver.

### Background

Screws and bolts which cannot be removed using standard spanner wrenches and flat blade, Phillips and hex-key drivers are used to prevent theft, vandalism and access to electrical and electronic components. Such tamper-proof screw and bolt heads have a design comprising recesses, or sockets, which mate with a corresponding security drive bit, like a key in a lock. In the absence of the correct security drive bit, the screw or bolt cannot be removed without drilling, chiseling or other obvious tampering methods.

A problem arises where existing security bits nonetheless become widely available, making it easy for unauthorised persons to remove the screws/bolts. There thus exists a need for a security fastener which cannot be removed using available tools and which is simple and inexpensive to manufacture.

GB2408302A relates to a screw having a head with a segment shaped recess.

### Summary

According to a first aspect of the invention, there is provided a security fastener for use with a corresponding driver according to claim 1, the fastener comprising: a shank defining a longitudinal centre axis; and a head having a face for mating with a security bit of the driver, the face including at least one recess for receiving a corresponding projection of the bit, wherein the head has: 1-fold rotational symmetry about the longitudinal centre axis of the shank; and a maximum of 1 mirror plane containing the longitudinal centre axis, such that mating of the corresponding projection of the driver with any of the at least one recesses is achievable only when the driver is in a single angular position with respect to the head, wherein the face comprises a first surface and the at least one recess is defined within the first surface, further wherein the longitudinal centre axis intersects the first surface. The head has a periphery and each of the at least one recesses is open at the periphery of the head. Since the recesses pass through the longitudinal centre axis, the recesses may be made open at the periphery of the head. This provides the recesses with a "free-draining" quality and means that the recesses are less prone to trapping dirt particles which might interfere with engagement between the head and the security bit.

The fact that the longitudinal centre axis intersects the first surface, and not one of the recesses, means that, unlike standard fasteners (such as Phillips screw head and Torx^{®} screw head), the fastener head is not engaged at the centre of the head. This means that the head must be engaged on opposing sides of the longitudinal centre axis to apply sufficient torque to the head to rotate the fastener. However, the low degree of symmetry of the recesses on the face (the face has 1-fold mirror symmetry, and 1-fold rotational symmetry only) in turn makes it difficult for standard tools to engage the head using opposing surfaces. Thus, removal of the fastener is restricted to those in possession of a suitable driver which can engage the head on opposing sides.

Optionally, the at least one recess comprises a plurality of recesses. Additionally or alternatively, the face has a first side and an opposing second side, wherein each of the recesses extends only on one of the first and second sides. This feature makes it difficult for sufficient torque to be applied to the head to rotate the fastener by engaging only a single recess. However, the low degree of symmetry of the head makes it difficult for more than one recess to be engaged without a specially designed security bit.

Optionally, the face comprises a first surface and the at least one recess is defined within the first surface, wherein a transition between the first surface and any one of the at least one recesses is formed by an engagement surface, said engagement surface being parallel to the longitudinal centre axis. Forming the recess with perpendicular engagement surfaces avoids the need for sloped surfaces which complicate the manufacturing process, for instance when using techniques such as milling. Perpendicular engagement surfaces also reduce the tendency of the driver to slip, or "cam", out of the recess when torque is applied.

Optionally, each of the engagement surfaces are described entirely by one of a single straight line or a single arc of constant radius when viewed along the longitudinal centre axis. The term "single straight line" is used here to mean a single straight line of constant gradient. Accordingly, the interface between the first and second surfaces describes no corners or change of radius, greatly simplifying manufacture. This feature also means the fastener can be easily manufactured using simple techniques such as milling using a single cylindrical milling tool.

Optionally, each one of the engagement surfaces which is described by a straight line when viewed along the longitudinal centre axis is angled with respect to every other one of the engagement surfaces which is described by a straight line when viewed along the longitudinal centre axis. Accordingly, the head presents no parallel opposing engagement surfaces. This makes it difficult to apply sufficient force to the engagement surfaces to rotate the fastener by gripping the engagement surfaces using a gripping tool such as pliers.

In some embodiments, the at least one recess comprises a first recess and a second recess, wherein: a transition between the first surface and the first recess is formed by a first engagement surface, said first engagement surface being described entirely by a straight line when viewed along the longitudinal centre axis; and a transition between the first surface and the second recess is formed by a second engagement surface, said second engagement surface being described entirely by a single arc of constant radius when viewed along the longitudinal centre axis. The combination of one arcuate engagement surface and one flat surface provides good engagement between the driver and the fastener whilst allowing for asymmetry and easy manufacture. Optionally, the first recess and the second recess are arranged diametrically opposite one another on the head. This arrangement makes it difficult to apply sufficient torque to the fastener to rotate the same by gripping the engagement surfaces using a gripping tool, such as a pliers. This is because tools with flat surfaces are unable to achieve good contact with the arcuate engagement surface.

In some embodiments, the at least one recess comprises a third recess, wherein a transition between the first surface and the third recess is formed by a third engagement surface, said third engagement surface being described entirely by a single straight line when viewed along the longitudinal centre axis. Further optionally, the third recess is substantially a mirror image of the first recess, the mirror plane containing the longitudinal centre axis.

### Brief description of the figures

The invention will now be described, by way of example, with reference to the following figures, in which:
Figure 1 is a side view of a first embodiment of a security fastener according to the present invention;
Figure 2 is a plan view of the security fastener of figure 1;
Figure 3 is an isometric view of a driver for installing and removing the fastener of figure 1;
Figure 4 is an enlarged side view of the security bit of the driver of figure 3;
Figure 5 is a plan view of the security bit of figure 4;
Figure 6 is a side view of a second embodiment of a security fastener according to the present invention;
Figure 7 is a plan view of the security fastener figure 6;

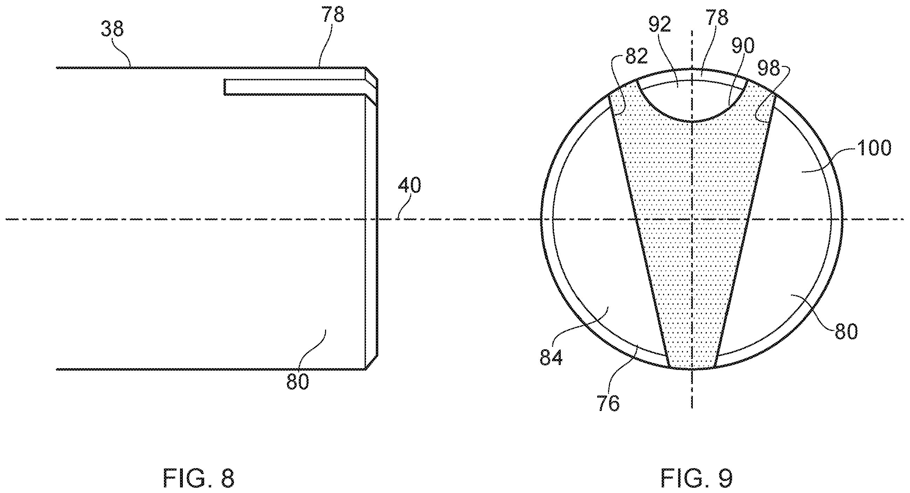

Figure 8 is an enlarged side view of the security bit of the driver of figure 6;
Figure 9 is a plan view of the security bit of figure 8;
Figures 10 to 12 show a method of manufacturing a security fastener according to an embodiment of the present invention.

### Detailed description of the figures

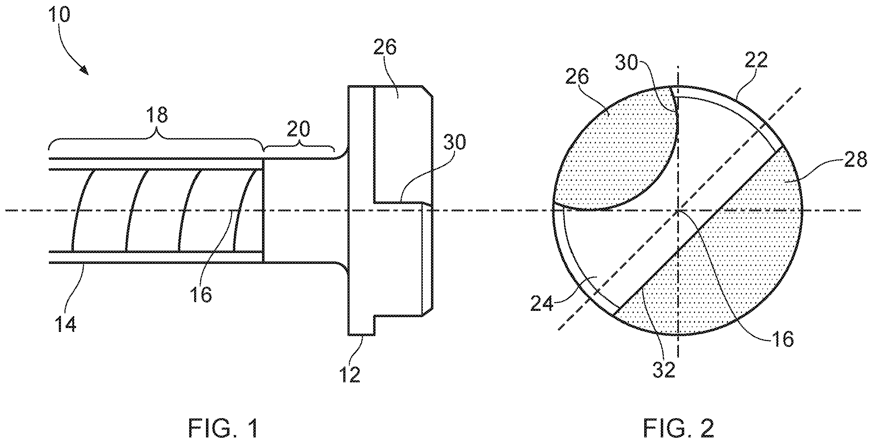

Referring to Figures 1 and 2, a fastener 10 according to a first embodiment of the present invention comprises a head 12 and a shank 14. The shank 14 defines a longitudinal centre axis 16 and preferably comprises a threaded portion 18 which may extend along the full length of the shank 14. Alternatively, as illustrated in Figures 1 and 2, the shank 14 may include a threaded portion 18 and a non-threaded portion 20. The head 12 is generally cylindrical and has a face designed to be engaged by a corresponding security bit of a driver according to the invention. When viewed along the longitudinal centre axis 16, the face defines a circular periphery 22. The face includes a first surface 24 and first and second recesses 26,28 defined within the first surface 24. Each of the first and second recesses 26,28 is open at the periphery 22 of the head.

Each of the first and second recesses 26,28 is defined by an indented, or recessed, surface within the first surface 24. The transition between the indented surface of the first recess 26 and the first surface 24 comprises a wall defining a first engagement surface 30 that extends parallel to the longitudinal centre axis 16. The transition between the indented surface of the second recess 28 and the first surface 24 comprises a wall defining a second engagement surface 32 that extends parallel to the longitudinal centre axis 16.

It will of course be appreciated that whilst the particular embodiment shown in Figures 1 and 2 is provided with two recesses, other embodiments may include only a single recess or include more than two recesses.

In the embodiment shown in Figures 1 and 2, when viewed along the longitudinal centre axis 16, the first engagement surface 30 between the first surface 24 and the first recess 26 describes an arc which intersects the circular periphery of the face of the head 12 at first and second points on the periphery 22, such that the first recess 26 comprises a lens shape. The arc described by the first engagement surface 30 preferably has a smaller radius than the radius of the circular periphery of the face, such that the first recess 26 has as an asymmetric lens shape.

The second engagement surface 32 is substantially flat, or planar. As such, when viewed along the longitudinal centre axis 16, the second engagement surface 32 describes a chord of the face, such that the second recess 28 has a segment shape.

The first 24 and second 26 recesses are disposed diametrically opposite each other on the face. As such, a mirror plane is defined along the diameter of the face through a centre line of the lens and segment defined respectively by the first 24 and second recesses 26.

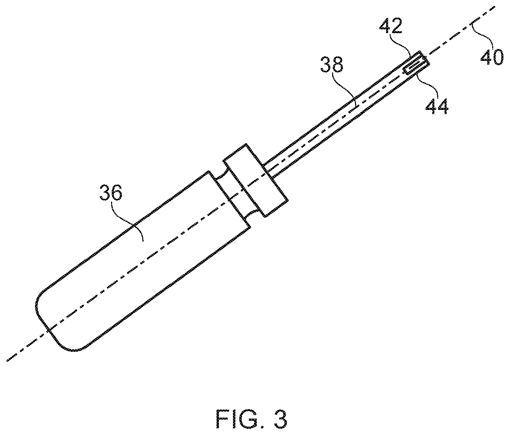

Referring to Figures 3 to 5, a driver 34 for installing and removing the fastener 10 according to the first embodiment comprises a handle 36 and a security bit 38 configured to mate with the face of the fastener 10, as will be described in more detail below. The security bit 38 defines a longitudinal centre axis 40 and includes first and second projections 42,44 which extend along a direction parallel to the longitudinal centre axis 40, and which correspond respectively to the first 26 and second 28 recesses of the fastener 10.

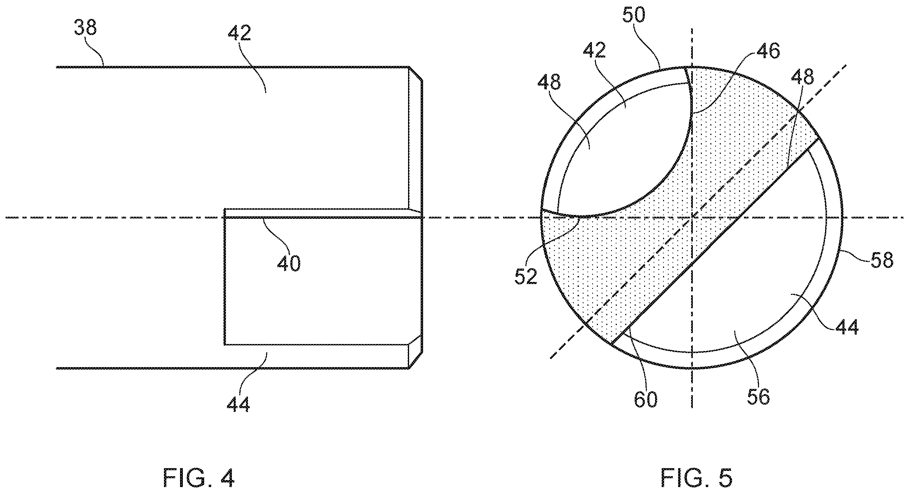

Referring in particular to figure 4, the first projection 42 has a form which is complementary to the first recess 26 of the fastener 10, and comprises a first driving surface 46 which extends parallel to the longitudinal centre axis 40 of the driver, and a first distal surface 48 which extends perpendicular to said longitudinal centre axis 40. The first distal surface 48 comprises an asymmetric lens shape which is congruent with the asymmetric lens shape of the first recess 26.

The second projection 44 has a form which is complementary to the second recess 28 of the fastener 10, and comprises a second driving surface 54 which extends parallel to the longitudinal centre axis 40 of the driver, and a second distal surface 56 which extends perpendicular to said longitudinal centre axis 40. The second distal surface 56 comprises a segment shape which is congruent with the segment shape of the second recess 28.

In use, the fastener 10 of the second embodiment is installed or removed in a hole or bore in an object by rotating the fastener 10 using the driver 34. The bit 38 of the driver 34 is mated with the face of the head 12 by engaging the first and second projections 42,44 in the first and second recesses 26,28, respectively. In this configuration, the first driving surface 52 of the first projection 42 is engaged with the first engagement surface 30 of the first recess 26, the second driving surface 54 of the second projection 44 is engaged with the second engagement surface 32 of the second recess 28. An operator then rotates the driver 34 in the appropriate direction using the handle 36. Torque is transferred to the fastener 10 through the driving surfaces 52,54 to the engagement surfaces 30,32 causing the fastener 10 to rotate to either insert or remove the fastener, as desired.

It will be understood that the angularly spaced arrangement of the recesses around the periphery of the head means that to apply sufficient torque to the fastener 10 to rotate the fastener, torque must be applied to each of the first and second engagement surfaces 30,32. As such, only a tool having a shape capable of mating with both recesses 62,64,66 will be able to remove the fastener 10. Due to the low degree of symmetry of the recesses on the face (the face has 1-fold mirror symmetry, and 1-fold rotational symmetry only), standard tools are unable to engage both recesses 26,28 simultaneously. Thus, removal of the fastener is restricted to those in possession of the driver 34.

It will also be appreciated that the use of an arcuate engagement surface, as in the first recess 26, in opposing relationship with the planar engagement surface of the second recess 28 means that the head presents no parallel opposing engagement surfaces. This makes it difficult to apply sufficient force to the engagement surfaces to rotate the fastener 10 by gripping the engagement surfaces using a gripping tool such as a wrench.

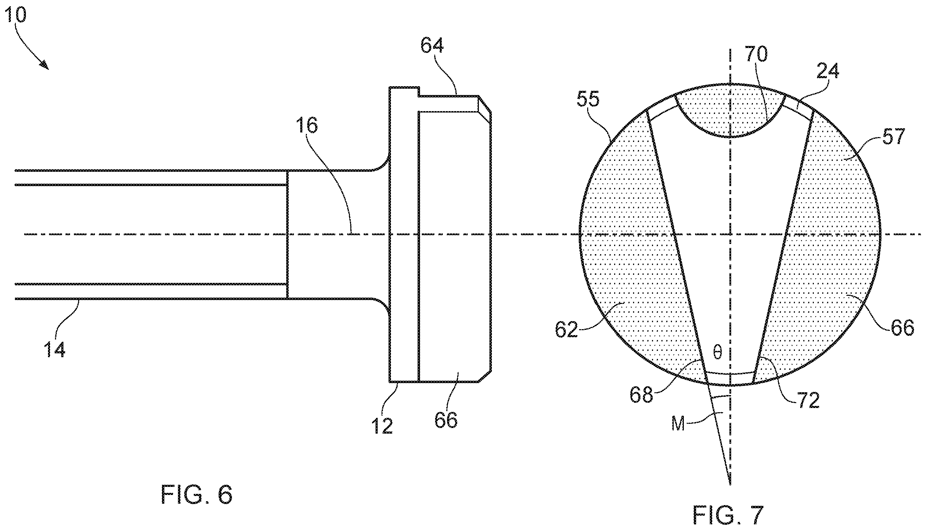

Referring to Figures 6 and 7, a fastener 10 according to a second embodiment of the present invention will now be described. The second embodiment has many elements in common with the first embodiment and like reference numerals are used for like elements. In the following description, only differences between the first and second embodiments will be described in detail.

The second embodiment of the fastener 10 comprises a head 12 having a face which includes a first surface 24 and first, second and third recesses 62,64,66. The transition between the indented surface of the first recess 62 and the first surface 24 comprises a wall defining a first engagement surface 68 that extends parallel to the longitudinal centre axis 16 of the fastener 10. The transition between the indented surface of the second recess 64 and the first surface 24 comprises a wall defining a second engagement surface 70 that extends parallel to the longitudinal centre axis 16. The transition between the indented surface of the third recess 66 and the first surface 24 comprises a wall defining a third engagement surface 72 that extends parallel to the longitudinal centre axis 16.

The first engagement surface 68 between the first surface 24 and the first recess 62 is substantially flat, or planar. As such, when viewed along the longitudinal centre axis 16, the first engagement surface 68 describes a chord of the face, such that the first recess 62 has a segment shape.

The second engagement surface 70 describes an arc which intersects the circular periphery 22 of the face of the head 12 at first and second points on said periphery, such that the second recess 64 comprises a lens shape. The arc described by the second engagement surface 70 has a smaller radius than the radius of the circular periphery 22 of the face, such that the second recess 64 has as an asymmetric lens shape.

The third engagement surface 72 between the first surface 24 and the third recess 66 is substantially flat, or planar. As such, when viewed along the longitudinal centre axis 16, the third engagement surface 72 describes a chord of the face, such that the third recess 66 has a segment shape. The chord described by the third engagement surface 70 has a length which is substantially the same as the length of the chord described by the first engagement surface 68.

The face of the second embodiment of the fastener 10 has a mirror plane M (shown by a dashed line in figure 7) which contains the longitudinal centre axis 16 and which divides the face into a first side 55 and an opposing second side 57. Each of the first and second sides 55,57 define equal semi-circular portions of the face. The first recess 62 is arranged on the first side 55 of the face and the third recess 66 is arranged on the second side 57 of the face. The third recess 66 comprises a mirror image of the first recess 62 through the mirror plane M. The second recess 64 is arranged between the first and second sides of the face and is centred on the mirror plane M. The first engagement surface 68 of the first recess 72 is angled with respect to the mirror plane M. In particular, the first engagement surface 68 is angled away from the mirror plane M in a direction towards the second recess 64. Since the third recess 66 is a mirror image of the first recess 62, the third recess 66 is also necessarily angled away from the mirror plane M in a direction towards the second recess 64.

Referring to Figures 6 and 7, a driver 34 for installing and removing the fastener 10 according to the second embodiment comprises a security bit 38 including first, second and third projections 76,78,80 which each project along a direction parallel to the longitudinal centre axis 40 of the bit 38. The first, second and third projections 76,78,80 correspond respectively to the first, second and third recesses 62,64,66 of the fastener 10 and are disposed in spaced angular relationship around the longitudinal centre axis 40 of the bit 38.

The first projection 76 has a form which is complementary to that of the first recess 62 of the fastener 10, and comprises a first driving surface 82 which extends parallel to the longitudinal centre axis 40 of the driver, and a first distal surface 84 which extends perpendicular to said longitudinal centre axis 40. The first distal surface 84 comprises a segment shape which is congruent with the segment shape of the first recess 62.

The third projection 80 has a form which is complementary to that of the third recess 66 of the fastener 10, and comprises a third driving surface 98 which extends parallel to the longitudinal centre axis 40 of the driver, and a third distal surface 100 which extends perpendicular to said longitudinal centre axis 40. The third distal surface 100 comprises a segment shape which is congruent with the segment shape of the third recess 66. The third projection 80 is a mirror image of the first projection 76 through a mirror plane containing the longitudinal centre axis 40.

The second projection 78 has a form which is complementary to that of the second recess 64 of the fastener 10 and comprises a second driving surface 90 which extends parallel to the longitudinal centre axis 40 of the driver, and a second distal surface 92 which extends perpendicular to said longitudinal centre axis 40. The second distal surface 92 comprises an asymmetric lens shape which is congruent with the asymmetric lens shape of the second recess 64.

In use, the fastener 10 of the second embodiment is installed in a hole or bore in an object by rotating the fastener 10 using the driver 34 of the second embodiment. The bit 38 of the driver 34 is mated with the face of the head 12 by engaging the first, second and third projections 76,78,80 in the first, second and third recesses 62,64,66, respectively. In this configuration, the first driving surface of the first projection is engaged with the first engagement surface 68 of the first recess 62, the second driving surface 70 of the second projection is engaged with the second engagement surface of the second recess, and the third driving surface 72 of the third projection 66 is engaged with the third engagement surface of the third recess. An operator then rotates the driver 34 using the handle 36. Torque is transferred to the fastener 10 through the driving surfaces 82,90,98 to the engagement surfaces 68,70,72 causing the fastener 10 to rotate. As the fastener 10 rotates the right-handed thread pulls the fastener 10 into the hole/bore. The driver 34 is then rotated until the fastener 10 bears against the surface of the object.

To remove the fastener 10, the bit 38 is again mated with the driver 34 by engaging the first, second and third projections 76,78,80 in the first, second and third recesses 62,64,66, respectively and the driver 34 rotated in the opposite direction.

It will be understood that the angularly spaced arrangement of the recesses around the periphery of the head means that in order to apply sufficient torque to the fastener 10 to rotate the same, torque must be applied to each of the first second and third engagement surfaces 68,70,72. As such, only a tool having a shape capable of mating with all three recesses 62,64,66 will be able to remove the fastener 10. Due to the low symmetry of the recesses on the face (the face has 1-fold mirror symmetry, and 1-fold rotational symmetry only), standard tools are unable to engage each of the recesses 62,64,66. Thus removal of the fastener is restricted to those in possession of the driver 34 of the second embodiment.

Like the first embodiment, the second embodiment also presents no parallel opposing engagement surfaces, making it difficult to apply sufficient force to the engagement surfaces to rotate the fastener 10 by gripping the engagement surfaces 68,70,72 using a gripping tool such as a wrench.

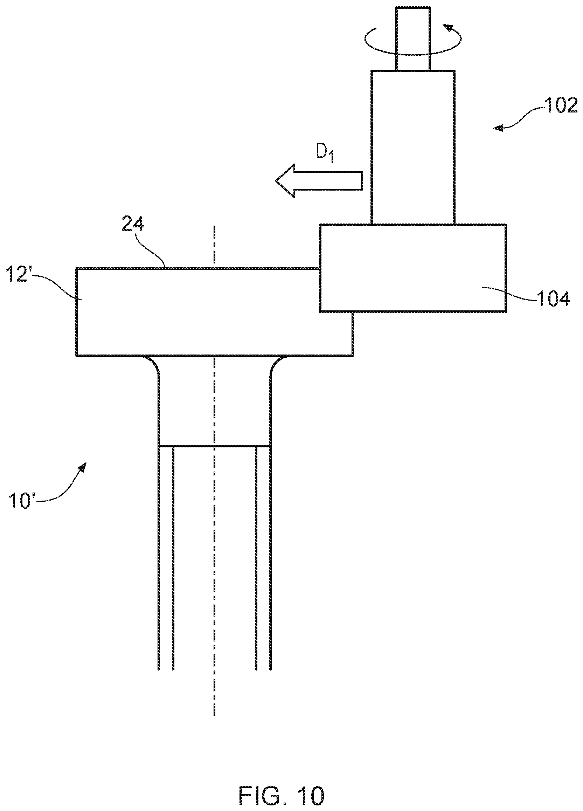

A method of manufacturing a security fastener as illustrated in the previous figures will now be described with reference to Figures 10 to 12.

Referring in particular to figure 10, a first step of the method comprises providing a preform 10' of the fastener. The preform 10' comprises a shank 14 defining a longitudinal centre axis 16 and a head 12' having a first surface facing along the longitudinal centre axis 16. The first surface 24 has a circular periphery 22 and a first side 50 and an opposing second side 52.

Still referring to figure 10, a second step of the method comprises cutting a first recess 26 into the first side 50 of the first surface of the head 12'. Preferably, the recesses are cut into the first surface by milling the head 12' using a rotary cutter 102.

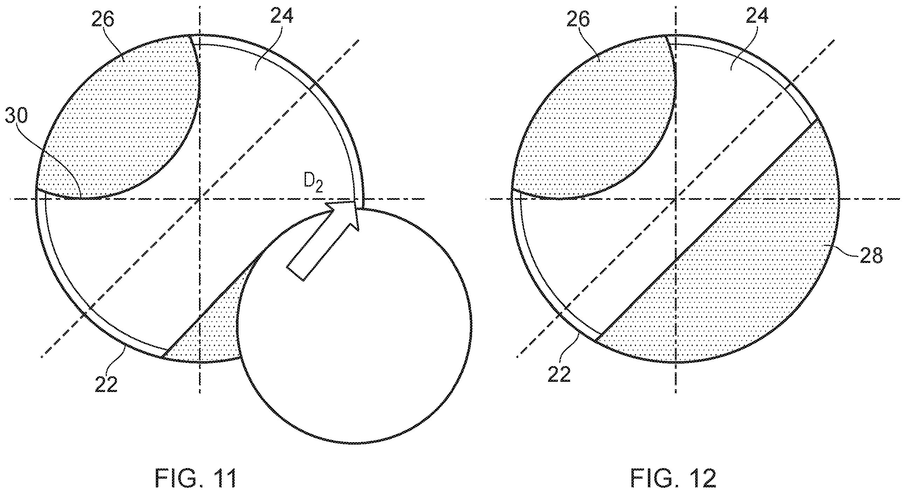

To cut the first recess 26 into head 12', the rotary cutter 102 is translated in a first radial direction D1 to move the cutter 102 partially into the head 12' through the periphery of the head 12'. The cylindrical cutter is then moved out of the head again by translating the cylindrical cutter in a reverse radial direction through the periphery. This results in an asymmetric lens-shaped recess which is open at the periphery 22 of the head, as shown in Figure 11.

The transition between the indented surface of the first recess 26 and the first surface 24 comprises a first engagement surface 30 that extends parallel to the longitudinal centre axis. When viewed along the longitudinal centre axis 16, the first engagement surface 30 is described by an arc having a radius equal to the radius of the cylindrical cutter.

A subsequent step in the method comprises cutting a second recess 28 into the second side 52 of the first surface 24 of the head 12'. To cut the second recess 28 into the head, the cylindrical cutter is translated in a lateral direction D2 to move the cutter into the second side of the head 12' through the periphery 22 of the head 12'. The cutter is then advanced in a straight line along the lateral direction D2 through the head 12' and thereafter exits the head 12' through the periphery 22 of the first surface 24. This results in a segment shaped recess which is open at the periphery of the head 12', as shown in figure 12.

In some embodiments, the recesses are cut whilst the preform is maintained substantially at room temperature. Such "cold-forging" processes are generally quick and low-cost since there is no need to heat the workpiece to high temperatures. Moreover, cold forged parts generally require minimal finishing compared to hot forged parts. In some embodiments, a generative machining process, such as CNC milling, is used to cut the recesses into the first surface.

The above description of the fasteners 10, drivers 34 and method is provided by way of example only and is not intended to be limiting upon the scope of the claimed invention.

## Claims

1. A security fastener (10) for use with a corresponding driver (34), the fastener (10) comprising:
a shank (14) defining a longitudinal centre axis (16); and
a head (12) having a face for mating with a corresponding security bit of the driver (34), the face including at least one recess for receiving a corresponding projection of the bit,
wherein the head (12) has:
1-fold rotational symmetry about the longitudinal centre axis (16) of the shank (14); and
a maximum of 1 mirror plane containing the longitudinal centre axis (16), such that mating of the corresponding projection of the driver (34) with any of the at least one recesses is achievable only when the driver (34) is in a single angular position with respect to the head (12),
wherein the face comprises a first surface (24) and the at least one recess is defined within the first surface (24), further wherein the longitudinal centre axis (16) intersects the first surface (24), wherein the head (12) has a periphery (22) and **characterised in that** each of the at least one recesses is open at the periphery (22) of the head (12).

2. A security fastener (10) according to claim 1, wherein the face has a first side (55) and an opposing second side (57), wherein each of the at least one recesses extends only on one of the first and second sides (55,57).

3. A security fastener (10) according to any preceding claim, wherein the face comprises a first surface (24) and the at least one recess is defined within the first surface (24), wherein a transition between the first surface (24) and each of the at least one recesses forms a respective engagement surface, each engagement surface being parallel to the longitudinal centre axis.

4. A security fastener (10) according to claim 3, wherein each of the engagement surfaces are described entirely by one of a single straight line or a single arc of constant radius when viewed along the longitudinal centre axis (16).

5. A security fastener (10) according to claim 4, wherein each one of the engagement surfaces which is described by a straight line when viewed along the longitudinal centre axis (16) is angled with respect to every other one of the engagement surfaces which is described by a straight line when viewed along the longitudinal axis.

6. A security fastener (10) according to any of claims 3 to 5, wherein the at least one recess comprises a first recess (26) and a second recess (28), wherein:
a transition between the first surface (24) and the first recess (26) is formed by a first engagement surface (30), said first engagement surface (30) being described entirely by a straight line when viewed along the longitudinal centre axis (16); and
a transition between the first surface (24) and the second recess (28) is formed by a second engagement surface (32), said second engagement surface (32) being described entirely by a single arc of constant radius when viewed along the longitudinal centre axis (16).

7. A security fastener (10) according to claim 6, wherein the first recess (26) and the second recess (28) are arranged diametrically opposite one another on the head (12).

8. A security fastener (10) according to claim 6, wherein the at least one recess comprises a third recess (66), wherein a transition between the first surface (24) and the third recess (66) is formed by a third engagement surface (68), said third engagement surface (68_ being described entirely by a single straight line when viewed along the longitudinal centre axis (16).

9. A security fastener (10) according to claim 8, wherein the face has a single mirror plane containing the longitudinal centre axis (16).

10. A security fastener (10) according to claim 8 or claim 9, wherein the third recess (66) is substantially a mirror image of the first recess (26), the mirror plane containing the longitudinal centre axis (16).

11. A security fastener (10) according to any preceding claim, wherein at least a portion of the shank (14) is threaded.

12. A driver (34) for a security fastener (10) according to any of claims 1 to 11, the driver including a security bit for mating with the face of the fastener (10), the bit comprising, for each one of the at least one recesses, a respective corresponding projection configured to mate with the respective one of the at least recesses, said projections comprising a driving surface configured to engage an engagement surface of the respective recess and thereby transfer torque to the fastener (10) to rotate the fastener (10).

## Patentansprüche

1. Sicherheitsverschluss (10) zur Verwendung mit einem entsprechenden Eintreiber (34), wobei der Verschluss (10) umfasst:
einen Schaft (14), der eine Längsmittelachse (16) definiert; und
einen Kopf (12), der eine Fläche zum Zusammenwirken mit einem entsprechenden Sicherungsbit des Eintreibers (34) aufweist, wobei die Fläche mindestens eine Aussparung zur Aufnahme eines entsprechenden Vorsprungs des Bits einschließt,
wobei der Kopf (12) Folgendes aufweist:
1-fache Rotationssymmetrie um die Längsmittelachse (16) des Schafts (14); und
maximal 1 Spiegelebene, die die Längsmittelachse (16) enthält, so dass das Zusammenwirken der entsprechenden Vorsprünge des Eintreibers (34) mit einer der mindestens einen Aussparungen nur dann erreicht werden kann, wenn sich der Eintreiber (34) in einer einzigen Winkelposition in Bezug auf den Kopf (12) befindet,
wobei die Fläche eine erste Oberfläche (24) umfasst und die mindestens eine Aussparung innerhalb der ersten Oberfläche (24) definiert ist, weiter wobei die Längsmittelachse (16) die erste Oberfläche (24) schneidet, wobei der Kopf (12) einen Umfang (22) aufweist und **dadurch gekennzeichnet, dass** jede der mindestens einen Aussparungen am Umfang (22) des Kopfes (12) offen ist.

2. Sicherheitsverschluss (10) nach Anspruch 1, wobei die Fläche eine erste Seite (55) und eine gegenüberliegende zweite Seite (57) aufweist, wobei jede der mindestens einen Aussparungen sich nur auf einer der ersten und zweiten Seiten (55, 57) erstreckt.

3. Sicherheitsverschluss (10) nach einem der vorstehenden Ansprüche, wobei die Fläche eine erste Oberfläche (24) umfasst und die mindestens eine Aussparung innerhalb der ersten Oberfläche (24) definiert ist, wobei ein Übergang zwischen der ersten Oberfläche (24) und jeder der mindestens einen Aussparungen eine jeweilige Eingriffsoberfläche bildet, wobei jede Eingriffsoberfläche parallel zur Längsmittelachse ist.

4. Sicherheitsverschluss (10) nach Anspruch 3, wobei jede der Eingriffsoberflächen bei Betrachtung entlang der Längsmittelachse (16) vollständig durch eine einzige gerade Linie oder einen einzigen Bogen mit konstantem Radius beschrieben wird.

5. Sicherheitsverschluss (10) nach Anspruch 4, wobei jede der Eingriffsoberflächen, die bei Betrachtung entlang der Längsmittelachse (16) durch eine gerade Linie beschrieben wird, in einem Winkel zu jeder anderen der Eingriffsoberflächen steht, die bei Betrachtung entlang der Längsachse durch eine gerade Linie beschrieben wird.

6. Sicherheitsverschluss (10) nach einem der Ansprüche 3 bis 5, wobei die mindestens eine Aussparung eine erste Aussparung (26) und eine zweite Aussparung (28) umfasst, wobei:
ein Übergang zwischen der ersten Oberfläche (24) und der ersten Aussparung (26) durch eine erste Eingriffsoberfläche (30) gebildet wird, wobei die erste Eingriffsoberfläche (30) bei Betrachtung entlang der Längsmittelachse (16) vollständig durch eine gerade Linie beschrieben wird; und
wobei ein Übergang zwischen der ersten Oberfläche (24) und der zweiten Aussparung (28) durch eine zweite Eingriffsoberfläche (32) gebildet wird, wobei die zweite Eingriffsoberfläche (32) bei Betrachtung entlang der Längsmittelachse (16) vollständig durch einen einzigen Bogen mit konstantem Radius beschrieben wird.

7. Sicherheitsverschluss (10) nach Anspruch 6, wobei die erste Aussparung (26) und die zweite Aussparung (28) diametral gegenüberliegend an dem Kopf (12) angeordnet sind.

8. Sicherheitsverschluss (10) nach Anspruch 6, wobei die mindestens eine Aussparung eine dritte Aussparung (66) umfasst, wobei ein Übergang zwischen der ersten Oberfläche (24) und der dritten Aussparung (66) durch eine dritte Eingriffsoberfläche (68) gebildet wird, wobei die dritte Eingriffsoberfläche (68) bei Betrachtung entlang der Längsmittelachse (16) vollständig durch eine einzige gerade Linie beschrieben wird.

9. Sicherheitsverschluss (10) nach Anspruch 8, wobei die Fläche eine einzige Spiegelebene aufweist, die die Längsmittelachse (16) enthält.

10. Sicherheitsverschluss (10) nach Anspruch 8 oder Anspruch 9, wobei die dritte Aussparung (66) im Wesentlichen ein Spiegelbild der ersten Aussparung (26) ist, wobei die Spiegelebene die Längsmittelachse (16) enthält.

11. Sicherheitsverschluss (10) nach einem der vorstehenden Ansprüche, wobei zumindest ein Abschnitt des Schafts (14) mit einem Gewinde versehen ist.

12. Eintreiber (34) für einen Sicherheitsverschluss (10) nach einem der Ansprüche 1 bis 11, wobei der Eintreiber ein Sicherheitsbit zum Zusammenwirken mit der Fläche des Verschlusses (10) einschließt, wobei das Bit für jede der mindestens einen Aussparungen einen jeweiligen entsprechenden Vorsprung umfasst, der so konfiguriert sind, dass er mit dem jeweiligen der mindestens Aussparungen zusammenwirkt, wobei die Vorsprünge eine Eintreibfläche umfassen, die so konfiguriert ist, dass sie mit einer Eingriffsoberfläche der jeweiligen Aussparung in Eingriff kommt, und dadurch ein Drehmoment auf den Verschluss (10) überträgt, um den Verschluss (10) zu drehen.

## Revendications

1. Élément de fixation de sécurité (10) pour une utilisation avec un dispositif d'entraînement (34) correspondant, l'élément de fixation (10) comprenant :
une tige (14) définissant un axe central longitudinal (16) ; et
une tête (12) présentant une face pour s'accoupler avec un embout de sûreté correspondant du dispositif d'entraînement (34), la face incluant au moins un évidement pour recevoir une saillie correspondante de l'embout,
dans lequel la tête (12) présente :
une symétrie de rotation d'ordre 1 autour de l'axe central longitudinal (16) de la tige (14) ; et
un maximum de 1 plan miroir contenant l'axe central longitudinal (16), de sorte qu'un accouplement de la saillie correspondante du dispositif d'entraînement (34) avec l'un quelconque des au moins un évidements ne soit réalisable que lorsque le dispositif d'entraînement (34) se trouve dans une seule position angulaire par rapport à la tête (12),
dans lequel la face comprend une première surface (24) et l'au moins un évidement est défini à l'intérieur de la première surface (24), en outre dans lequel l'axe central longitudinal (16) croise la première surface (24), dans lequel la tête (12) présente une périphérie (22) et **caractérisé en ce que** chacun des au moins un évidements est ouvert au niveau de la périphérie (22) de la tête (12).

2. Élément de fixation de sécurité (10) selon la revendication 1, dans lequel la face présente un premier côté (55) et un second côté opposé (57), dans lequel chacun des au moins un évidements s'étend seulement sur un des premier et second côtés (55, 57).

3. Élément de fixation de sécurité (10) selon une quelconque revendication précédente, dans lequel la face comprend une première surface (24) et l'au moins un évidement est défini à l'intérieur de la première surface (24), dans lequel une transition entre la première surface (24) et chacun des au moins un évidements forme une surface de mise en prise respective, chaque surface de mise en prise étant parallèle à l'axe central longitudinal.

4. Élément de fixation de sécurité (10) selon la revendication 3, dans lequel chacune des surfaces de mise en prise est décrite entièrement par un élément parmi une seule ligne droite ou un seul arc de rayon constant lorsqu'observée le long de l'axe central longitudinal (16).

5. Élément de fixation de sécurité (10) selon la revendication 4, dans lequel chacune des surfaces de mise en prise qui est décrite par une ligne droite lorsqu'observée le long de l'axe central longitudinal (16) est inclinée par rapport à chaque autre surface de mise en prise des surfaces de mise en prise qui est décrite par une ligne droite lorsqu'observée le long de l'axe longitudinal.

6. Élément de fixation de sécurité (10) selon l'une quelconque des revendications 3 à 5, dans lequel l'au moins un évidement comprend un premier évidement (26) et un deuxième évidement (28), dans lequel :
une transition entre la première surface (24) et le premier évidement (26) est formée par une première surface de mise en prise (30), ladite première surface de mise en prise (30) étant décrite entièrement par une ligne droite lorsqu'observée le long de l'axe central longitudinal (16) ; et
une transition entre la première surface (24) et le deuxième évidement (28) est formée par une deuxième surface de mise en prise (32), ladite deuxième surface de mise en prise (32) étant décrite entièrement par un seul arc de rayon constant lorsqu'observée le long de l'axe central longitudinal (16).

7. Élément de fixation de sécurité (10) selon la revendication 6, dans lequel le premier évidement (26) et le deuxième évidement (28) sont agencés de manière diamétralement opposée l'un par rapport à l'autre sur la tête (12).

8. Élément de fixation de sécurité (10) selon la revendication 6, dans lequel l'au moins un évidement comprend un troisième évidement (66), dans lequel une transition entre la première surface (24) et le troisième évidement (66) est formée par une troisième surface de mise en prise (68), ladite troisième surface de mise en prise (68) étant décrite entièrement par une seule ligne droite lorsqu'observée le long de l'axe central longitudinal (16).

9. Élément de fixation de sécurité (10) selon la revendication 8, dans lequel la face présente un seul plan miroir contenant l'axe central longitudinal (16).

10. Élément de fixation de sécurité (10) selon la revendication 8 ou la revendication 9, dans lequel le troisième évidement (66) est sensiblement une image miroir du premier évidement (26), le plan miroir contenant l'axe central longitudinal (16).

11. Élément de fixation de sécurité (10) selon une quelconque revendication précédente, dans lequel au moins une partie de la tige (14) est filetée.

12. Dispositif d'entraînement (34) pour un élément de fixation de sécurité (10) selon l'une quelconque des revendications 1 à 11, le dispositif d'entraînement incluant un embout de sûreté pour s'accoupler avec la face de l'élément de fixation (10), l'embout comprenant, pour chacun des au moins un évidements, une saillie correspondante respective configurée pour s'accoupler avec l'évidement respectif parmi les au moins un évidements, lesdites saillies comprenant une surface d'entraînement configurée pour venir en prise avec une surface de mise en prise de l'évidement respectif et transférer par ce moyen un couple à l'élément de fixation (10) pour faire tourner l'élément de fixation (10).
